# DEMANDE DE BREVET EUROPEEN

(11) **EP 0 553 018 A1**
(43) Date de publication de la demande: **28.07.1993**
(21) Numéro de dépôt: 93400113.2
(22) Date de dépôt: 19.01.1993
(51) Int. Cl.: B60R 13/04

(54) **Elément profilé armé**

(30) Priorité: 21.01.1992 FR 9200584
(71) Demandeur: HUTCHINSON, F-75008 Paris (FR)
(72) Inventeur: Guillon, Henri, F-45700 Le Bois St. Maurice sur Fessard (FR)
(74) Mandataire: Ores, Irène

(57) **Abrégé**

Elément profilé armé, comprenant une matrice (13) de matériau caoutchoutique, du type élastomère vulcanisable ou analogue, dans laquelle est noyée une armature de renfort (14) extrudée en une matière plastique du type des thermoplastiques ou des produits qui en sont dérivés.

L'armature comprend un fil (F) en polyester ou en un matériau analogue, qui s'oppose à l'allongement et, le cas échéant, permet de tirer l'armature dans une filière d'extrusion.

## Description

L'invention a pour objet un élément profilé armé et, plus particulièrement, un tel élément en un matériau du type élastomère.

Des éléments profilés de ce type sont connus dans la technique, en particulier celle des joints d'étanchéité pour l'industrie du bâtiment ou de l'automobile, mais également dans d'autres domaines où un élément longiligne et à section droite constante sur toute sa longueur est muni d'une armature interne lui conférant des qualités, notamment de résistance, qu'il ne pourrait avoir autrement en raison de la nature même du matériau en lequel il est constitué.

Si de tels éléments profilés connus, généralement en un matériau du type caoutchoutique surmoulé et adhérisé sur une armature métallique, par exemple à base d'acier ou d'aluminium, donnent satisfaction, on a cependant constaté qu'ils pouvaient être sensibles à la corrosion de leur armature métallique, laquelle au demeurant est relativement coûteuse et peut en outre être une source d'accident par les barbes ou bavures qu'elle forme à la découpe de l'élément profilé.

Si on a déjà proposé dans DE-U-9 014 184 un élément profilé avec armature en matière plastique, cette dernière est extrudée directement à la forme souhaitée de sorte que le procédé de fabrication ne présente pas la facilité de mise en oeuvre permettant une exploitation industrielle simple.

C'est, par conséquent, un but général de l'invention de fournir un élément profilé armé perfectionné présentant les mêmes qualités que celles des profilés en matériau caoutchoutique comportant une armature métallique ou une armature en matière plastique, mais qui ne présente pas les inconvénients des éléments connus.

C'est, aussi, un but de l'invention de fournir un tel élément profilé armé dont le coût soit moindre que celui des dispositifs connus, dont la fabrication soit aussi simple par contre que celle de ces dispositifs et qui, en outre, peut être facilement mis en oeuvre, en particulier par cintrage ou galbage pour s'adapter aux desiderata de la pratique.

C'est, encore, un but de l'invention de fournir un tel élément profilé armé qui conserve au cours du temps ses qualités et qui, en outre, soit de fabrication simple.

Un élément profilé armé, comprenant une matrice de matériau caoutchoutique, du type élastomère vulcanisable ou analogue, dans laquelle est noyée une armature de renfort extrudée en une matière plastique du type des thermoplastiques ou des produits qui en sont dérivés, est caractérisé, selon l'invention, en ce que l'armature comprend un fil en polyester ou en un matériau analogue, qui s'oppose à l'allongement et, le cas échéant, permet de tirer l'armature dans une filière d'extrusion.

Dans une forme de réalisation avantageuse de l'invention, le profilé armé est en un matériau caoutchoutique du type EPDM et l'armature est en une matière thermoplastique du type des polyoléfines.

Dans une réalisation préférée, l'armature est en polypropylène.

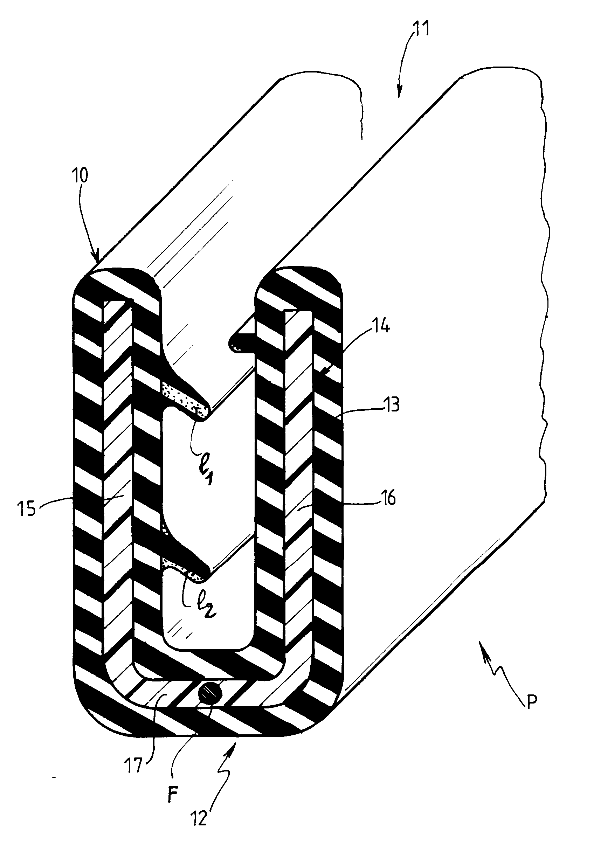

D'autres caractéristiques et avantages de l'invention apparaîtront de la description qui suit, faite à titre d'exemple et en référence à la figure unique du dessin annexé qui est une vue schématique en perspective d'un profilé armé selon l'invention.

Dans la forme de réalisation décrite et représentée, ledit profilé P est à section droite en U, avec des ailes 10 et 11 sensiblement parallèles réunies par une partie 12. La matrice 13 du profilé P est en un matériau du type caoutchouc, vulcanisable, et ladite matrice enrobe une armature 14 laquelle, selon l'invention, est en une matière plastique du type des thermoplastiques ou dérivés.

Pour la fabrication d'un profilé selon l'invention, on extrude d'abord le matériau constitutif de l'armature 14 sous forme d'une ébauche pouvant être enroulée sur une bobine ou touret ou sous forme d'un plat auquel est associé un fil en polyester ou matériau analogue F. Dans ce dernier cas, et après mise en forme du plat façonné pour constituer un organe en U à ailes 15 et 16 réunies par une base 17, ledit organe en matière thermoplastique ou en un dérivé d'une telle matière est alors enrobé du matériau constitutif de la matrice 13 dans une tête d'extrusion appropriée.

En variante, le plat de matière thermoplastique extrudé est mis en forme après enrobage par le matériau constitutif de la matrice 13 ou lors du passage dans la tête d'extrusion dudit matériau.

Dans l'un et l'autre des modes d'exécution qui viennent d'être décrits, la matrice 13 peut être réalisée non pas en un matériau, mais en plusieurs matériaux, par exemple coextrudés pour donner à certaines parties du profilé des caractéristiques différentes de celles d'autres parties, comme par exemple des caractéristiques de plus grande souplesse pour des lèvres comme l₁ ou l₂ régnant à l'intérieur du profilé en U le long de l'aile 10, laquelle, comme l'aile 11 et la partie 12, est sensiblement plus rigide.

Quel que soit le mode de fabrication de l'élément profilé P, l'utilisation d'une matière thermoplastique ou d'un dérivé d'une telle matière pour l'armature 14 a pour conséquence que ladite armature prisonnière de la matrice est légèrement ramollie à chaud, lors de l'extrusion du ou des matériau(x) vulcanisable(s) 13, de sorte que le profil armé obtenu peut, à la fin de l'étape de vulcanisation, et avant refroidissement, être post-formé à chaud à la forme définitive souhaitée.

Un élément profilé armé selon l'invention peut ainsi être cintré suivant des rayons de courbure appropriés lors de sa déformation à chaud, d'une part, mais également être galbé à la forme voulue lors de son montage sur le support qu'il est destiné à équiper, par exemple une baie de vitre de porte d'automobile, ou analogue, et cela en faisant application de ses qualités de flexion.

Un élément profilé armé selon l'invention ne présente pas les inconvénients des dispositifs antérieurement connus à armature métallique, ni en ce qui concerne la corrosion de ladite armature, ni en ce qui concerne les inconvénients liés aux problèmes de coupe, tout en étant d'un prix inférieur à celui des armatures connues, d'une part et offrant, d'autre part, des qualités de déformabilité ou de capacité de mise en forme accrues par rapport à celles des éléments profilés à armature métallique.

De bons résultats ont été obtenus avec un profilé armé réalisé en un matériau caoutchoutique du type EPDM et une armature en polyoléfine, de préférence en polypropylène.

Le fil F, en polyester ou matériau analogue, permet de s'opposer à un allongement non souhaité, d'une part et offre une prise facile pour tirer sur la bande à laquelle il est associé et faciliter sa mise en forme lors du passage dans une filière d'extrusion, d'autre part. Il peut ainsi permettre, en tirant, de faire passer l'armature dans une forme en U ouvert après qu'elle ait été préchauffée en ligne juste avant l'enrobage de caoutchouc.

## Revendications

1. Elément profilé armé, comprenant une matrice (13) de matériau caoutchoutique, du type élastomère vulcanisable ou analogue, dans laquelle est noyée une armature de renfort (14) extrudée en une matière plastique du type des thermoplastiques ou des produits qui en sont dérivés, caractérisé en ce que l'armature comprend un fil (F) en polyester ou en un matériau analogue, qui s'oppose à l'allongement et, le cas échéant, permet de tirer l'armature dans une filière d'extrusion.

2. Elément profilé armé selon la revendication 1, caractérisé en ce que la matrice (13) est en un caoutchouc du type EPDM et en ce que l'armature (14) est en matière thermoplastique du type des polyoléfines.

3. Elément profilé armé selon la revendication 2, caractérisé en ce que l'armature est en polypropylène.
